# EUROPÄISCHE PATENTSCHRIFT

(11) **EP 1 656 980 B1**
(45) Veröffentlichungstag und Bekanntmachung des Hinweises auf die Patenterteilung: **22.08.2007**
(21) Anmeldenummer: 04105727.4
(22) Anmeldetag: 12.11.2004
(51) Int. Cl.: B01D 35/18, F16N 39/00

(54) **Anordnung zur Aufbereitung von Motoröl in einem Kraftfahrzeug**
Arrangement for processing the engine oil in a motor vehicle
Arrangement pour traiter l'huile de moteur dans un véhicule automobile

(43) Veröffentlichungstag der Anmeldung: 17.05.2006
(73) Patentinhaber: Ford Global Technologies, LLC, A subsidary of Ford Motor Company, Dearborn, MI 48126 (US)
(72) Erfinder: Yacoub, Yasser Mohammed Sayed, 50858, Köln (DE); Moraal, Paul Eduard, 6291 VP, Vaals (NL)
(74) Vertreter: Drömer, Hans-Carsten

(56) Entgegenhaltungen:
- DE-C- 540 110
- US-A- 1 718 800
- US-A- 2 701 684
- US-A- 2 785 109
- US-A- 5 265 432

## Beschreibung

Die Erfindung betrifft einen Motorölkreislauf eines Kraftfahrzeuges mit einer Anordnung zur Aufbereitung von Motoröl mit den Merkmalen des Oberbegriffs des Anspruchs 1.

Kraftstoffverunreinigungen im Motoröl stellen bei aktuellen Kraftfahrzeugen ein gravierendes Problem dar. Derartige Kraftstoffverunreinigungen treten insbesondere bei bestimmten Motorbetriebsarten auf, die zum Betrieb bzw. zur Regeneration moderner Abgasnachbehandlungssysteme erforderlich sind. Ein derartiger kritischer Betriebsmodus ist insbesondere die Nacheinspritzung von Kraftstoff in den Zylinder eines Verbrennungsmotors, d. h. die Einspritzung zusätzlichen Kraftstoffs in einen oder mehrere Zylinder nach dem jeweiligen Haupteinspritzvorgang, jedoch noch während des Arbeitshubes. Derartige Nacheinspritzungen stellen eine effektive Methode zur Erhöhung der Abgastemperaturen und/oder zum kurzfristigen Erreichen eines angereicherten Gemisches dar, wobei vorteilhafterweise das Motordrehmoment im Wesentlichen unverändert bleibt.

Ein derartiger Betriebsmodus ist beispielsweise für die periodische Verbrennung von Ruß in einem Partikelfilter eines Dieselmotors bei hohen Abgastemperaturen oder für die Regeneration einer Stickoxidfalle zur Freisetzung des während Magerbetriebszuständen angesammelten Stickstoffs besonders zweckmäßig. Abhängig von der Anzahl, dem Ausmaß und dem Zeitpunkt der Nacheinspritzvorgänge während des Arbeitshubes mischt sich ein Teil des nacheingespritzten Kraftstoffs mit dem Ölfilm auf den Zylinderwänden und gelangt in den Motorsumpf, wodurch eine Kraftstoffverunreinigung des Motoröls auftritt. Dabei nimmt die Kraftstoffverunreinigung für jeden Einspritzvorgang, abhängig von dem Ausmaß der Verzögerung gegenüber dem Haupteinspritzvorgang und der Menge des nacheingespritzten Kraftstoffes zu. Außerdem nimmt die Kraftstoffverunreinigung bei niedrigen Öltemperaturen und insbesondere bei Kraftstoffen mit schweren Kohlenwasserstoffbestandteilen zu, d. h., daß das vorstehend beschriebene Problem bei Dieselmotoren gravierender ist als für mit Benzin betriebene Ottomotoren.

Erschwerend kommt hinzu, daß das Problem der Motorölverunreinigungen sehr stark von dem Betriebsmodus des Kraftfahrzeuges abhängt. So kann bei häufigen Kaltstarts und einem anschließenden Kurzstreckenbetrieb die entstehende Ölverunreinigung fünfmal so stark sein als bei einem Betrieb, bei dem der Motor im Wesentlichen im aufgewärmten Zustand betrieben wird. Deshalb muß derartigen Worste-Case-Situationen mit vorgegebenen Ölwechselintervallen (typischerweise alle 15.000 km oder jährlich) Rechung getragen werden, wodurch die Betriebskosten erhöht und durch den Austausch von ansonsten noch verwendbaren Öls unnötige Ressourcen verbraucht werden.

Die Verunreinigung des Motoröls durch Kraftstoffbestandteile hat einen negativen Effekt auf den Motorverschleiß und kann insbesondere bei Stadtfahrten (Fahrten mit geringen Geschwindigkeiten und Lasten, insbesondere mit Durchschnittsgeschwindigkeiten von 15 bis 20 km/h) und anschließenden Autobahnfahrten (Volllast) sogar zu einer Beschädigung des Motors führen.

Diese negativen Effekte sind im Wesentlichen durch zwei Phänomene bedingt, die durch die Verunreinigung des Öls auftreten:

Zum einen werden die physikalischen Eigenschaften des Schmieröls beeinträchtigt (insbesondere die Viskosität), was zu einem höheren Motorverschleiß führt. Außerdem erhöht sich das Niveau des Motoröls im Kurbelwellengehäuse. Bei hohen Verunreinigungsraten (bis zu 25 Gewichtsprozent) kann die Schmiermittelmischung (Kraftstoff und Öl) in die Brennkammem der Zylinder übertreten und insbesondere bei Verzögerungsbetriebszuständen zu unkontrollierten Verbrennungen und damit schweren Motorschäden führen.

Bei Dieselmotoren mit Partikelfiltern, die eine regelmäßige Regeneration durch Rußverbrennung benötigen, sowie bei Verbrennungsmotoren mit Stickoxidfallen, die ebenfalls eine regelmäßige Regeneration benötigen, tritt das Problem der Kraftstoffverunreinigung des Motoröls in den Regenerationsmodi unter ungünstigen Bedingungen derart verstärkt auf, daß dieses Phänomen sogar ein Hindernis für den Einsatz dieser Abgasbehandlungsanordnungen an sich darstellt.

Deshalb sind Maßnahmen äußerst wünschenswert, mit denen diesem vorgenannten Problem entgegengewirkt werden kann. Hierzu ist es bereits bekannt, daß Motoröl in Kraftfahrzeugen während des laufenden Betriebs einer Regeneration zu unterziehen. Dabei wird das Öl in einer Regenerationsanordnung über seine normale Betriebstemperatur hinaus erhitzt, wodurch die im Motoröl enthaltenen und einen geringeren Siedepunkt als das Öl aufweisenden Kraftstoffbestandteile verdampfen. Die entstehenden Dämpfe werden abgesaugt und durch ein Überdruckventil abgelassen und können dem Verbrennungsgemisch beigefügt und auf diese Weise verwertet werden.

Eine derartige Regenerationsanordnung ist aus der WO 96/25996 bekannt. Gemäß diesem Dokument ist in der Ölfiltereinheit eine Verdampfungskammer mit elektrisch beheizten Scheiben vorgesehen, an denen der gesamte, im Verbrennungsmotor umgepumpte Ölstrom entlang fließt und dabei auf Temperaturen zwischen 115 und 135 °C erhitzt werden soll. Derartige Temperaturen reichen jedoch nicht aus, um hochsiedende Bestandteile, insbesondere aus Dieselkraftstoffen, aus dem Motoröl wirksam zu entfernen. Trotz der vorgeschlagenen, relativ niedrigen Destillationstemperaturen sind für die Heizung der bekannten Anordnung typische elektrische Leistungen von etwa 180 Watt erforderlich, wodurch die elektrische Anlage des Kraftfahrzeuges stark belastet und die Kraftstoffökonomie letztlich negativ beeinflußt wird. Zum Erreichen höherer Temperaturen wären Heizleistungen im Bereich einiger hundert Watt erforderlich, die die im Kraftfahrzeug verfügbaren elektrischen Leistungen überschreiten würden und die Kraftstoffökonomie deutlich verschlechtern würden.

Aus der US 5,707,515 ist eine Anordnung zur Aufbereitung von Motoröl im Schmierölkreislauf eines Verbrennungsmotors bekannt, bei der nicht, wie bei der vorstehend genannten Schrift der vollständige Motorölstrom, sondern lediglich ein Teilstrom von weniger als 50 % des umgepumpten Gesamtstroms einer Aufbereitung unterzogen wird. Hierzu fließt das Motoröl unter Schwerkraftwirkung an einer elektrisch beheizten Halbkugel herab. Die dabei verdampfenden Verunreinigungen werden in die Einlaßanordnung des Kraftfahrzeuges zurückgeführt, wobei ein Überdruckventil vorgesehen ist, das sich erst öffnet, wenn sich ein bestimmter Gasdruck aufgebaut hat. Als Temperatur der elektrisch beheizten Halbkugel werden etwa 90 °C vorgeschlagen, so daß mit dieser Anordnung im Wesentlichen nur leicht flüchtige Kraftstoffbestandteile sowie Wasser verdampft werden können.

Eine der vorstehend beschriebenen Anordnung vergleichbare Ölaufbereitungseinrichtung, bei der ein Motorölteilstrom im Vorbeifluß an geheizten Flächen auf relativ geringe Temperaturen von etwa 90 °C gebracht wird und die entstehenden Gase abgeführt werden, ist aus der WO 97/26978 bekannt.

Aus der US 6,053,143 ist es schließlich bekannt, daß Motoröl einer Regeneration unter erhöhten Temperaturen im Bereich zwischen 170 und 260 °C zu unterziehen, um hierdurch sowohl die Kraftstoffverunreinigungen zu verdampfen als auch die physikalischen Eigenschaften des Schmieröls zu verbessern und den Kraftstoffverbrauch hierdurch zu senken.

Die DE 540 110 befasst sich mit einem Verfahren zur Regenerierung von Schmieröl mit Hilfe der Auspuffgase von Brennkraftmaschinen. Die Auspuffgase beheizen das zu regenerierende Öl, wobei ein Teil der Auspuffgase das Öl durchblasen, um die leichten Bestandteile aus dem Öl zu entfernen. Hierbei weist ein Auspuffsammler des Motors eine Ausbuchtung auf, in die der eigentliche Regenerator eingebaut ist. Das zu regenerierende Öl kommt aus einer Leitung, durchfließt den Regenerator und fließt durch die Ablaufleitung zurück in das Motorgehäuse.

Die US 5,265,432 offenbart eine Ölreinigungsvorrichtung zur Verwendung im Zusammenhang mit einem Kühlsystem. In einem Tank wird Öl mittels einer Heizvorrichtung erwärmt, wodurch Kühlmitteldämpfe (refregerant vapor) entstehen, welche dem Tank teilweise wieder zugeführt werden, so dass diese das Öl in dem Tank durchsprudeln.

Um bei einem geringen Energieeinsatz und geringem Platzbedarf sowie geringem konstruktiven Aufwand eine Regeneration des Motoröls mit höheren Temperaturen zu ermöglichen, ist in einer auf die Anmelderin zurückgehenden Anordnung zur Aufbereitung von Motoröl (EP 1 525 912 B1) vorgesehen, daß die Heizeinrichtung im Bodenbereich des Destillationsraumes und ein Gasauslaß im oberen Bereich des Destillationsraums angeordnet sind, wobei Steuermittel vorgesehen sind, mittels derer das Motorölniveau im Destillationsraum während des Betriebes der Aufbereitungsanordnung in einem vorgegebenen Niveaubereich gehalten werden kann. Das Dokument EP1 525912B1 fällt jedoch unter Art. 54(3) EPÜ.

Die Anordnung zur Aufbereitung von Motoröl hat sich in der Praxis dahin gehend bewährt, daß in dem Destillationsraum ein bestimmtes Motorölniveau aufrecht erhalten wird, wobei dieses Ölreservoir von dem unten liegenden Heizelement auf eine gewünschte Temperatur gebracht wird, während ständig oder nur zeitweise Motoröl aus dem Motorölkreislauf zugeführt und gleichzeitig Öl aus dem Destillationsraum wieder abgeführt wird. Mittels des vorteilhaften Konstruktionsprinzips ist es möglich, besonders kleine und kompakte Aufbereitungsanordnungen zu schaffen, denen dann nur ein kleiner Teil des gesamten Ölflusses im Schmierölkreislauf des Verbrennungsmotors zugeführt wird, wodurch hohe Regenerationstemperaturen bei Einsatz vergleichsweise geringer elektrischer Heizleistungen ermöglicht wird. Dieser zweckmäßigen Ausgestaltung liegt die Erkenntnis zugrunde, daß eine Regeneration des kompletten Ölstromes bei jedem Umlauf im Schmierölkreislauf bei weitem nicht erforderlich ist, sondern daß es ausreicht, lediglich einen kleinen Teil des Öls einer Regenerationsbehandlung zu unterziehen, um so die Kraftstoffverunreinigungen auf einem Niveau zu halten, das den Betrieb des Kraftfahrzeuges nicht beeinträchtigt.

Der Erfindung liegt die Aufgabe zugrunde, eine Anordnung der eingangs genannten Art mit einfachen Mitteln dahin gehend zu verbessern, daß die Wiedergewinnung von Kraftstoff aus dem Öl signifikant bei einem gleich bleibenden Temperaturniveau beschleunigt wird, wobei aber die Heiztemperatur des Öls reduziert werden kann, während die Wiedergewinnung des Kraftstoffes aufrecht erhalten wird.

Erfindungsgemäß wird die Aufgabe durch einen Motorölkreislauf eines Kraftfahrzeuges mit einer Anordnung zur Aufbereitung von Motoröl mit den Merkmalen des Anspruchs 1 gelöst. Mittels dieser Weiterbildung der Anordnung zur Aufbereitung von Motoröl in einem Motorölkreislauf wird vorteilhaft erreicht, daß die Wiedergewinnung von Kraftstoff aus dem Öl signifikant bei derselben Öltemperatur beschleunigt wird, wobei die Heiztemperatur des Öls reduziert werden kann, während die Wiedergewinnung des Kraftstoffes aufrecht erhalten wird. Durch die Reduzierung der Heiztemperatur wird jegliches Risiko einer Öloxidation begrenzt, wobei gleichzeitig weniger Energie benötigt wird.

Vorteilhafterweise ist vorgesehen, daß das Medium ein Blow-By-Gas des Kurbelgehäuse-Ventilationssystems ist, welches im Wesentlichen einen positiven Druck aufweist.

Die Gasströmung durch die Mediumleitung kann hierbei einer vollständigen oder einer teilweisen Strömung des Blow-By-Gases des Kurbelgehäuse-Ventilationssystems entsprechen.

Um die Strömung des Mediums zu regulieren, ist vorteilhaft vorgesehen, daß der Mediumleitung ein Dosierventil zugeordnet ist. Zweckmäßigerweise werden mittels des Dosierventils zudem Schwankungen des Kurbelgehäusedrucks als einer Funktion eines Motorbetriebspunktes kompensiert.

Günstig im Sinne der Erfindung ist, wenn alternativ vorgesehen ist, daß das Medium ein atmosphärisches Gas ist. Hierbei sollte ein Sog einer Wiedergewinnungsleitung allerdings ausreichend hoch angesetzt werden. Dies ist zum Beispiel der Fall, wenn die Wiedergewinnungsleitung mit einem Lufteinlaßsystem beispielsweise in Strömungsrichtung oberhalb eines Turboladers oder in Strömungsrichtung unterhalb einer Abgasrückführungs-Drosselklappe (EGR-Drossel) verbunden ist. Selbstverständlich können hierzu auch externe Mittel vorgesehen sein.

Bei dieser vorteilhaften Ausgestaltung erlaubt der Unterdruck der Kraftstoffwiedergewinnungsleitung ein Ansaugen von gasförmiger Luft, die durch das Motoröl in der Destillationskammer sprudelt.

Die gasförmigen Bestandteile (Kraftstoffbestandteile) und das sprudelnde Medium (gasförmige Medium) werden bevorzugt in ihrem gasförmigen Zustand zumindest dem Einlaßsystem zugeführt. Bevorzugterweise wird hierbei ein Einspeisepunkt gewählt, der einen ständigen Unterdruck (negativer Druck) aufweist. Dies kann zum Beispiel ein Einspeisepunkt sein, der in Strömungsrichtung oberhalb des Turboladers oder in Strömungsrichtung unterhalb einer Abgasrückführungs-Drosselklappe liegen kann.

Weitere vorteilhafte Ausgestaltungen der Erfindung sind in den Unteransprüchen offenbart und werden anhand der folgenden Figurenbeschreibung beispielhaft näher erläutert. Es zeigen:
- Fig. 1: Eine schematische Darstellung einer Aufbereitungsanordnung, und
- Fig. 2: einen Querschnitt durch die miniaturisierte Aufbereitungsanordnung aus Figur 1.

In den unterschiedlichen Figuren sind gleiche Teile stets mit denselben Bezugszeichen versehen, weswegen dies in der Regel auch nur einmal beschrieben werden.

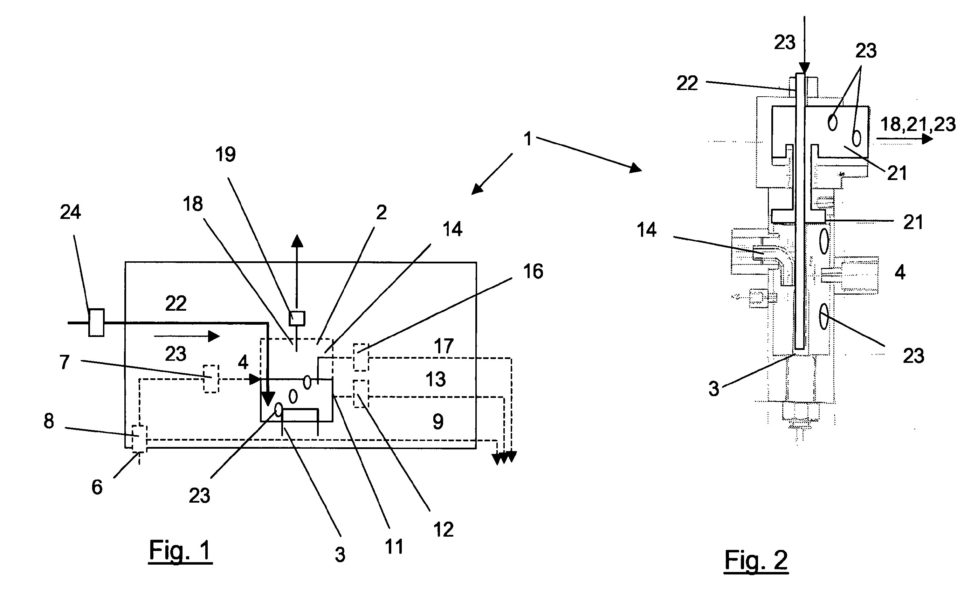

Figur 1 zeigt teilweise einen Ölkreislauf eines (nicht im Einzelnen dargestellten) Verbrennungsmotors schematisch. Dem Ölkreislauf ist eine nicht dargestellte Ölpumpe zugeordnet, die in einem Ölsumpf befindliches Motoröl über einen konventionellen Ölfilter einem Druckölkreislauf zuführt. Falls der Ölfilter zugesetzt sein sollte, kann die Ölzirkulation über einen Bypaß aufrechterhalten werden. Das unter Druck stehende Öl wird den zu schmierenden Verbrauchsstellen, wie beispielsweise einem Turbolader, zugeführt, wobei zur Aufrechterhaltung einer bestimmten Betriebstemperatur ein Ölkühler in den Ölkreislauf integriert sein kann. Das Öl strömt nach seiner Verwendung drucklos in den Ölsumpf zurück.

Um Kraftstoffverunreinigungen aus dem Motoröl zu entfernen, wird ein kleiner Teil des Motorölstromes einer Anordnung 1 zur Aufbereitung des Motoröls dem Motorölkreislauf eines Kraftfahrzeuges zugeführt. Die Aufbereitungsanordnung 1 weist einen Destillationsraum 2 auf, in dessen unterem Bereich ein elektrisches Heizelement 3 bzw. eine Heizeinrichtung angeordnet ist. Das Heizelement 3 wird über eine nicht dargestellte elektrische Anschlußleitung mit Energie von einer elektrischen Anlage versorgt. Alternativ kann zur Aufheizung des in dem Destillationsraum 2 befindlichen Motoröls auch eine andere Wärmequelle, insbesondere die Wärme heißer Abgase, herangezogen werden. Die Temperatur im Destillationsraum 2 wird über eine nicht dargestellte Thermostateinheit auf einen Zieltemperaturwert hin geregelt.

Dem Destillationsraum 2 wird über einen Öleinlaß 4 an einer Abzweigstelle 6 des Ölkreislaufs ein abgezweigter kleiner Anteil des druckbehafteten Motorölstromes zugeführt. Die Durchflußmenge durch den Öleinlaß 4 wird durch ein bevorzugt fest eingestelltes Drosselventil 7 begrenzt, dessen Durchflußrate auf einen mittleren Öldruck hin ausgelegt ist, so daß bei diesem mittleren Öldruck das gewünschte Niveau im Destillationsraum 2 erzielt wird. Bei niedrigem Öldruck kann die Durchflußrate je nach Auslegung ganz auf Null gehen.

Ferner ist ein Überdruckventil 8 vorgesehen, durch welches bei besonders hohen Motoröldrücken das Öl an der Aufbereitungsanordnung 1 vorbei direkt in den Ölsumpf abgeleitet wird. Die Ableitung ist mittels des Pfeils 9 dargestellt.

In dem Destillationsraum 2 wird das Motoröl durch die Heizeinrichtung bzw. das Heizelement 3 auf eine Temperatur von typischerweise 160 °C bis 180 °C erhitzt, wodurch die im Öl enthaltenen Kraftstoffbestandteile verdampfen.

Durch einen Ölauslaß 11 wird das Öl aus dem Behälter wieder herausgeführt und gelangt über ein in diesem Ausführungsbeispiel auf eine feste Durchflußrate eingestelltes Drosselventil 12 wieder in den Ölsumpf zurück. Die Rückleitung ist mittels des Pfeils 13 dargestellt.

Da der am Öleinlaß 4 anliegende Motoröldruck über den Betriebsbereich des Motors stark variiert, variiert die durch den Öleinlaß 4 eingelassene Motorölmenge ebenfalls stark, wohingegen die über den Ölauslaß 11 abfließende Ölmenge im Wesentlichen konstant bleibt. Daher führt eine Erhöhung des Motoröldrucks dazu, daß der Ölstand im Destillationsraum 2 über das gewünschte Maß hinaus ansteigen kann. Übersteigt der Ölstand im Destillationsraum 2 ein vorgegebenes Maximalniveau, so gelangt das überschüssige Öl über eine Überlauföffnung 14 und ein Drosselventil 16 ebenfalls wieder in den Ölsumpf zurück. Dies ist mittels des Pfeils 17 dargestellt.

In den Betriebsbereichen, in denen ein Überlauf auftritt, ist es möglich, daß das Öl aufgrund des zu großen Gesamtdurchsatzes durch die Heizeinrichtung 3 bzw. das Heizelement 3 nicht ausreichend erhitzt werden kann. Da diese hochtourigen Betriebsbereiche jedoch relativ selten auftreten und insbesondere hinsichtlich der Kraftstoffverunreinigung des Motoröls in der Regel nicht besonders kritisch sind, kann hingenommen werden, daß die Regeneration in diesen Betriebsbereichen nicht optimal durchgeführt werden kann. Dieser Tatbestand kann vorteilhaft genutzt werden, indem die Heizeinrichtung 3 bzw. das Heizelement 3 nur dann eingeschaltet wird, wenn kein Überlauf auftritt, oder sogar nur in dem Betriebsbereich, in dem bei entsprechend starker Drosselung des Einlaßventils 7 kein Öleinlaß auftritt (Leerlauf und niedrige Drehzahl), wobei in diesem Fall die Destillationstemperatur sehr genau über die Heizdauer geregelt werden kann.

Die verdampfenden Kraftstoffbestandteile 21 werden über einen im oberen Bereich des Destillationsraumes 2 angeordneten Gasauslaß 18 abgeführt. Dieser Gasauslaß 18 ist über ein weiteres Drosselventil 19 mit einer Stelle eines Einlaß- bzw. Auslaßsystems verbunden, an der ein Unterdruck herrscht, wie z. B. an einer Stelle im Abgassystem vor einem Turbolader. Durch den entsprechenden Unterdruck wird der Destillationsvorgang beschleunigt und somit die Heizenergieeffizienz der Anordnung 1 erhöht. Die Kraftstoffdämpfe 21 werden dann in das Einlaß- bzw. Auslaßsystem eingespeist und dort verbrannt. Alternativ oder zusätzlich können die Kraftstoffdämpfe 21 an einem Kondensator kondensiert werden und in flüssiger Form über eine Leitung in die Kraftstoffanlage zurückgeführt werden.

Der Anordnung 1 ist eine in den Destillationsraum 2 mündende Mediumleitung 22 zugeordnet. Durch Mediumleitung 22 wird ein gasförmiges Medium 23 in den Destillationsraum 2 geführt. Das gasförmige Medium 22 vermengt sich weitgehend mit dem im Destillationsraum 2 angeordneten Motoröl. Durch die Einleitung des Mediums 22 in den Destillationsraum 2 wird der Kraftstoffrückgewinnungsprozeß unterstützt.

Die Gasströmung kann mittels einer vollständigen oder einer Teilströmung eines Blow-By-Gases des Kurbelgehäuse-Ventilationssystems erreicht werden, welches im Wesentlichen einen positiven Druck (Überdruck) aufweist.

Der Mediumleitung 22 ist ein Durchlaßventil 24 zugeordnet, so daß die Strömung des gasförmigen Mediums (Blow-By-Gas) reguliert werden kann. Damit werden aber auch Schwankungen des Kurbelgehäusedrucks als eine Funktion eines Motorbetriebspunktes kompensiert. Durch die Zuführung des gasförmigen Mediums 23 in den Destillationsraum 2 wird vorteilhaft erreicht, daß eine Wiedergewinnung des Kraftstoffes aus dem Öl signifikant beschleunigt wird, wobei eine Öltemperatur nahezu auf einem unveränderten Niveau gehalten werden kann. Vorteilhafterweise kann die Heiztemperatur des Öls aber auch reduziert werden, während eine Wiedergewinnung des Kraftstoffes aufrechterhalten werden kann. Durch die Reduzierung der Heiztemperatur wird ein Risiko einer Öloxidation begrenzt, wobei gleichzeitig weniger Energie benötigt wird.

Anstatt einer Einführung von Blow-By-Gasen als Medium 23 in den Destillationsraum 2 kann alternativ vorgesehen sein, als Medium 23 atmosphärische Gase (Umgebungsluft) in den Destillationsraum 2 einzuleiten. Hierbei sollte allerdings eine Saugleistung einer Wiedergewinnungsleitung einen genügend hohen Betrag aufweisen. Dies ist beispielsweise erfüllt, wenn die Wiedergewinnungsleitung mit einem Lufteinlaßsystem in Strömungsrichtung oberhalb eines Turboladers und/oder in Strömungsrichtung unterhalb einer Abgasrückführungs-Drosselklappe (EGR-Drossel) verbunden ist. Selbstverständlich sind hierzu aber auch externe Mittel möglich. In diesem Fall bewirkt der negative Druck (Unterdruck) der Kraftstoffwiedergewinnungsleitung ein Ansaugen gasförmiger Luft (Umgebungsluft) und sprudelt dieses durch das Öl in dem Destillationsraum 2.

Der gasförmige Kraftstoff 21 und das durchsprudelnde Medium 23 (gasförmige Medium 23) werden in ihrem gasförmigen Zustand dem Einlaßsystem an einem Punkt mit negativem Druck (Unterdruck) zugeführt. Dieser kann zum Beispiel in Strömungsrichtung gesehen oberhalb eines Turboladers oder in Strömungsrichtung gesehen unterhalb der Abgasführungs-Drosselklappe (EGR-Drossel) angeordnet sein.

Damit wird ein Medium unterstütztes, vorzugsweise Gas unterstütztes Kraftstoff-in-Öl-Wiedergewinnungssystem zur Verfügung gestellt.

Figur 2 zeigt eine Aufbereitungsanordnung in detaillierterer Darstellung. Es handelt sich um eine miniaturisierte Anordnung mit zylindrischer Grundfläche ähnlich der bisher unveröffentlichten Anordnung der Anmelderin.

Anhand eines Beispieles soll die Wirkungsweise der Anordnung 1 zur Aufbereitung von Motoröl in einem Motorölkreislauf des Kraftfahrzeuges gezeigt werden.

Bei einer anfänglichen Kraftstoffverunreinigung von ungefähr 10 % und einer Aufheizung des Gemisches mit einer konstanten Temperatur von 60 °C über 48 Stunden wurde eine Endverunreinigung von 9,3 % erzielt, wobei keinerlei gasförmiges Medium durch den Destillationsraum 2 geführt wurde.

Wird dagegen das gasförmige Medium 23 (Blow-By-Gas oder Umgebungsluft) durch den Destillationsraum 2 geführt, ergab sich eine Endverunreinigung von ca. 7,2 %. Dieser Test wurde bei einer beispielhaften konstanten Öltemperatur von 100 °C wiederholt, was zu einer Endverunreinigung von 7,3 % geführt hat. Hierbei war allerdings die Durchflußrate des gasförmigen Mediums 23 identisch zu der Durchflußrate bei einer Öltemperatur von konstant 60 °C. Bei einer Verdoppelung der Durchflußrate des gasförmigen Mediums 23 durch die Destillationskammer 2 bei einer konstanten Öltemperatur von 100 °C wurde eine Endverunreinigung von 6,7 % nach 48 Stunden gemessen.

Durch die Vermengung des gasförmigen Mediums 23 mit dem Kraftstoff-Öl-Gemisch wird somit im Vergleich einer Nichteinleitung von gasförmigen Medien in den Destillationsraum 2 eine erhebliche Kraftstoffwiedergewinnung erreicht.

## Patentansprüche

1. Motorölkreislauf eines Kraftfahrzeuges mit einer Anordnung zur Aufbereitung von Motoröl, die einen Destillationsraum (2) aufweist, der einen Öleinlaß (4) und einen Ölauslaß (11) umfaßt, wobei dem Destillationsraum (2) eine Heizeinrichtung (3) zugeordnet ist, die im Bodenbereich des Destillationsraums (2) angeordnet ist, so daß in dem Motoröl enthaltene Verunreinigungen, insbesondere Kraftstoffverunreinigungen, in einen gasförmigen Zustand überführbar sind, die als verdampfende Kraftstoffbestandteile (21) über einen im oberen Bereich des Destillationsraumes (2) angeordneten Gasauslaß (18) abgeführt werden, wobei eine in den Destillationsraum (2) mündende Mediumleitung (22) vorgesehen ist, durch die ein gasförmiges Medium (23) in den Destillationsraum (2) geführt wird, so daß sich das gasförmige Medium (23) mit dem im Destillationsraum (2) angeordneten Motoröl weitgehend vermengt, **dadurch gekennzeichnet, dass** dem Destillationsraum (2) über den Öleinlaß (4) an einer Abzweigstelle (6) des Ölkreislaufs ein abgezweigter kleiner Anteil des druckbehafteten Motorölstromes zugeführt wird, und dass eine Überlauföffnung (14) vorgesehen ist, so dass überschüssiges Öl in einen Ölsumpf zurückgeführt wird, wenn der Ölstand im Destillationsraum (2) ein vorgegebenes Maximalniveau übersteigt.

2. Motorölkreislauf mit einer Anordnung nach Anspruch 1,
**dadurch gekennzeichnet, daß**
das gasförmige Medium (23) ein Blow-By-Gas des Kurbelgehäuse-Ventilationssystems ist, welches im Wesentlichen einen positiven Druck, d.h. Überdruck, aufweist.

3. Motorölkreislauf mit einer Anordnung nach Anspruch 1 oder 2,
**dadurch gekennzeichnet, daß**
der Mediumleitung (22) ein Drosselventil (24) zugeordnet ist, so daß die Strömung des gasförmigen Mediums (23) regulierbar ist.

4. Motorölkreislauf mit einer Anordnung nach Anspruch 1,
**dadurch gekennzeichnet, daß**
das gasförmige Medium (23) ein atmosphärisches Gas, d.h. Umgebungsluft, ist.

5. Motorölkreislauf mit einer Anordnung nach einem der vorhergehenden Ansprüche,
**dadurch gekennzeichnet, daß**
die gasförmigen Bestandteile und das gasförmige Medium (23) in ihrem gasförmigen Zustand zumindest einem Einlaßsystem zugeführt werden.

## Claims

1. Engine oil circuit of a motor vehicle having an arrangement for treating engine oil, which has a distillation zone (2) comprising an oil inlet (4) and an oil outlet (11), the distillation zone (2) having an associated heating device (3), which is arranged at the bottom of the distillation zone (2), so that impurities contained in the engine oil, in particular fuel contaminants, can be converted into a gaseous state and led off as vaporizing fuel constituents (21) via a gas outlet (18) arranged in the upper area of the distillation zone (2), a medium line (22) being provided in the distillation zone (2), through which a gaseous medium (23) is fed into the distillation zone (2), so that the gaseous medium (23) mixes with the engine oil present in the distillation zone (2), **characterized in that** a diverted smaller fraction of the pressurized engine oil flow is delivered to the distillation zone (2) via the oil inlet (4) at a branch (6) in the oil circuit, and that an overflow opening (14) is provided, so that excess oil is returned to an oil sump when the oil level in the distillation zone (2) exceeds a predefined maximum level.

2. Engine oil circuit having an arrangement according to Claim 1, **characterized in that** the gaseous medium (23) is a blow-by gas from the crankcase ventilation system, which essentially has a positive pressure, that is to say an excess pressure.

3. Engine oil circuit having an arrangement according to Claim 1 or 2, **characterized in that** a throttle valve (24) is assigned to the medium line (22), so that the flow of gaseous medium (23) can be regulated.

4. Engine oil circuit having an arrangement according to Claim 1, **characterized in that** the gaseous medium (23) is an atmospheric gas, that is to say ambient air.

5. Engine oil circuit having an arrangement according to any one of the preceding Claims, **characterized in that** the gaseous constituents and the gaseous medium (23) are fed to at least one inlet system in their gaseous state.

## Revendications

1. Circuit d'huile moteur d'un véhicule automobile, qui présente un système de traitement de l'huile moteur doté d'une chambre de distillation (2) qui présente une admission d'huile (4) et une sortie d'huile (11), un dispositif de chauffage (3) disposé dans la partie du fond de la chambre de distillation (2) étant associé à la chambre de distillation (2) de telle sorte que les impuretés présentes dans l'huile moteur, en particulier des contaminations par le carburant, puissent être transférées à l'état gazeux et puissent être évacuées sous la forme de composants vaporisables (21) du carburant par une sortie de gaz (18) disposée dans la partie supérieure de la chambre de distillation (2),
un conduit de fluide (22) qui débouche dans la chambre de distillation (2) et par lequel un fluide gazeux (23) est amené dans la chambre de distillation (2) de telle sorte que le fluide gazeux (23) se mélange largement avec l'huile moteur présente dans la chambre de distillation (2) étant prévu,
**caractérisé en ce que**
une petite partie dérivée de l'écoulement d'huile moteur sous pression en un emplacement de dérivation (6) du circuit d'huile est amenée à la chambre de distillation (2) par l'intermédiaire de l'admission d'huile (4) et **en ce qu'**une ouverture de débordement (14) est prévue de telle sorte que l'huile en excès soit renvoyée dans le carter d'huile lorsque le niveau d'huile dans la chambre de distillation (2) dépasse un niveau maximum prédéterminé.

2. Circuit d'huile moteur doté d'un système selon la revendication 1, **caractérisé en ce que** le fluide gazeux (23) est un gaz de balayage du système de ventilation du carter de vilebrequin, dont la pression est essentiellement positive, c'est à dire est une surpression.

3. Circuit d'huile moteur doté d'un système selon la revendication 1 ou 2, **caractérisé en ce qu'**une soupe d'étranglement (24) est associée au conduit (22) de fluide pour pouvoir réguler l'écoulement du fluide gazeux (23).

4. Circuit d'huile moteur doté d'un système selon la revendication 1, **caractérisé en ce que** le fluide gazeux (23) est un gaz atmosphérique, c'est-à-dire l'air ambiant.

5. Circuit d'huile moteur doté d'un système selon l'une des revendications précédentes, **caractérisé en ce que** les composants gazeux et le fluide gazeux (23) sont amenés à l'état gazeux à au moins un système d'admission.
